# FASCICULE DE BREVET EUROPEEN

(11) **EP 3 820 683 B1**
(45) Date de publication et mention de la délivrance du brevet: **02.09.2026**
(21) Numéro de dépôt: 19753149.4
(22) Date de dépôt: 09.07.2019
(51) Int. Cl.: B29C 70/44, B29C 70/34, B29C 70/36, B29C 70/54, B29C 70/18, B32B 3/12, B29C 70/48, B29C 70/70, B32B 37/14, B29D 24/00, B29D 99/00, B32B 7/12, B29L 31/60

(54) **PROCÉDÉ DE FABRICATION D'UN PANNEAU COMPOSITE**
VERFAHREN ZUR HERSTELLUNG EINER VERBUNDPLATTE
METHOD FOR MANUFACTURING A COMPOSITE PANEL

(30) Priorité: 10.07.2018 FR 1856345
(43) Date de publication de la demande: 19.05.2021
(73) Titulaire: Safran Nacelles, 76700 Gonfreville-l'Orcher (FR)
(72) Inventeur: ROLLAND, Clément, 76700 GONFREVILLE-L'ORCHER (FR); DELARUE, Jean Baptiste, 76700 GONFREVILLE-L'ORCHER (FR); THOMAS, Jean Jacques, 76700 GONFREVILLE-L'ORCHER (FR); HUS, Vianney, 76700 GONFREVILLE-L'ORCHER (FR); PREAU, Mathieu, 76700 GONFREVILLE-L'ORCHER (FR); ROUSSEL, Alain, 76700 GONFREVILLE-L'ORCHER (FR)
(74) Mandataire: Germain Maureau
(86) Numéro de dépôt international: PCT/FR2019/051708
(87) Numéro de publication internationale: WO 2020/012111

(56) Documents cités:
- WO-A1-2008/118649
- WO-A1-2011/096935
- DE-A1- 10 358 295
- DE-B4- 10 358 295

## Description

La présente invention se rapporte à la fabrication de panneaux composites comprenant une âme centrale alvéolaire du type nid d'abeille prise en sandwich entre deux peaux.

L'invention est plus particulièrement appliquée aux panneaux d'inverseur de poussée de nacelle de turboréacteur formés d'un tel panneau composite.

Ce type de panneau comporte généralement au moins une face aérodynamique obtenue lorsque la peau utilisée est une peau acoustique perforée d'une multitude d'orifices permettant une communication fluidique entre l'extérieur et l'intérieur de l'âme centrale alvéolaire du composite, formant ainsi un panneau composite acoustique. DE10358295A1 divulgue un procédé de fabrication d'un matériau composite , grâce auquel il est possible de recouvrir directement de fibres composites des matériaux de support à pores ouverts, tels que des mousses ou des structures en nid d'abeille.

La fabrication d'un tel panneau peut être réalisée par plusieurs solutions.

Une première de ces solutions consiste à utiliser un procédé de drapage d'un tissu pré-imprégné puis autoclavé. Toutefois une telle solution nécessite le collage de plusieurs pièces fabriquées séparément avant assemblage pour former la structure composite sandwich.

Une autre solution est d'utiliser la technique dite d'infusion de résine. Cette technique consiste à réaliser les pièces composites en disposant différentes couches de matériaux sur une forme, puis à assurer à l'intérieur de ces différentes couches la diffusion d'une résine en vue de sa polymérisation.

Ce type de technique est mise en œuvre notamment dans le cas de panneaux composites présentant une seule face aérodynamique de sorte que, pour réaliser un panneau composite présentant deux faces aérodynamiques de part et d'autre dudit panneau, cela impose le collage de plusieurs pièces fabriquées séparément.

Enfin, un autre procédé de fabrication connu qui permet d'obtenir une pièce avec deux faces aérodynamiques est le moulage par injection de résine liquide, dit RTM (« Resin Transfert Molding »). Ce procédé RTM consiste à injecter sous pression et dans un moule fermé de la résine dans une préforme de renfort sèche. Le vide est souvent effectué dans l'outillage afin de faciliter la migration de la résine. La principale caractéristique de ce procédé est qu'il permet d'obtenir des pièces comportant deux faces lisses parfaitement calibrées.

Toutefois, il résulte généralement de la mise en œuvre de ce procédé, la présence non désirée de résine à l'intérieur des alvéoles. Ceci est particulièrement préjudiciable, en particulier lorsque le panneau composite à fabriquer est destiné à former un panneau d'atténuation acoustiques.

En effet, ces panneaux sont prévus pour réduire les émissions de bruit des turboréacteurs, ces panneaux présentant en général une structure sandwich comprenant :
- une peau perforée, perméable à l'air, externe (orientée vers la source du bruit), dite « résistive » ou « acoustique », dont le rôle est de dissiper l'énergie acoustique,
- une structure à âme alvéolaire du type nid d'abeille et,
- une peau interne formée par une peau pleine (opposée à la source du bruit), dite structurante.

Dans ce cas, l'espace intérieur des cellules est particulièrement important du fait que chacune des alvéoles de l'âme centrale forme un raisonneur de Helmholtz.

La présente invention a pour objet de proposer une solution permettant une fabrication simplifiée d'un panneau composite, en réduisant substantiellement le nombre d'étape de fabrication, notamment en évitant une étape finale de collage des éléments entre eux, tout en permettant d'aboutir à un panneau composite dont les alvéoles conservent leur intégrité.

À cet effet, l'invention concerne un procédé de fabrication d'un panneau composite comprenant une âme centrale alvéolaire interposée entre deux peaux.

Selon l'invention, le procédé de fabrication comprend les étapes suivantes :
- fabrication d'un élément à structure alvéolaire comprenant une structure à âme alvéolaire interposée entre deux couches de plis structuraux destinées à former les peaux,
- positionnement de l'élément à structure alvéolaire dans un moule,
- formation de moyens de drainage de part et d'autre de la structure à âme alvéolaire,
- infusion de l'élément à structure alvéolaire de sorte à l'imprégner d'une résine,
- réalisation d'un drainage de la résine par les moyens de drainage dans l'élément à structure alvéolaire lors de l'étape d'infusion, les moyens de drainage présentant une géométrie configurée pour assurer le drainage, et
- polymérisation de l'élément à structure alvéolaire imprégné pour former le panneau composite.

Par « interposée entre deux couches de plis structuraux » on entend que la structure à âme alvéolaire est disposé entre deux couches de plis structuraux, des éléments tels que des films adhésifs pouvant être disposés entre la structure à âme alvéolaire et les couches de plis structuraux.

Ainsi, après imprégnation de la résine, l'ensemble se retrouvera assemblé pour ne former qu'une seule et même pièce sandwich.

Les « plis structuraux » sont des plis de renforts fibreux tels qu'en carbone (UD ou tissu), empilés les uns sur les autres, qui après avoir été imprégnés de résine via un procédé dit LCM (Liquid Composite Moulding), ont pour fonction d'apporter la résistance mécanique nécessaire afin de reprendre les efforts s'appliquant sur la pièce à laquelle ils appartiennent.

Selon un mode de réalisation possible, les moyens de drainage sont obtenus par un procédé de stabilisation de façon à former des ondulations le long de chaque face de l'élément à structure alvéolaire.

Le procédé de fabrication comprend alors :
- une étape préliminaire de fabrication d'une structure à âme alvéolaire étanche avant l'étape de fabrication d'un élément à structure alvéolaire comportant une étape de positionnement d'une première couche de stabilisation sur une première face de la structure à âme alvéolaire et une étape de positionnement d'une deuxième couche de stabilisation sur une deuxième face de la structure à âme alvéolaire,
- les moyens de drainage étant obtenus lors d'une étape de polymérisation préliminaire durant laquelle les couches de stabilisation sont déformées pour former des ondulations le long de chaque face de l'élément à structure alvéolaire.

De préférence, les deux couches de stabilisation sont collées sur les bords périphériques de la structure à âme alvéolaire lors de l'étape préliminaire de fabrication de la structure à âme alvéolaire étanche.

Selon un autre mode de réalisation, le procédé de fabrication d'un panneau composite comprend une étape préliminaire de fabrication d'une structure à âme alvéolaire préformée avant l'étape de fabrication d'un élément à structure alvéolaire comportant :
- une étape de positionnement d'un premier élément déformable sur un moule,
- une étape de positionnement d'une première couche de stabilisation sur le premier élément déformable,
- une étape de positionnement d'une première face de la structure à âme alvéolaire sur la première couche de stabilisation,
- une étape de positionnement d'une deuxième couche de stabilisation sur une deuxième face de la structure à âme alvéolaire,
- une étape de positionnement d'un deuxième élément déformable sur la deuxième couche de stabilisation, les premier et deuxième éléments préformés comprenant chacun une face ondulée destinée à être en contact des couches de stabilisation respectives,
- une étape de positionnement d'un contre moule sur le deuxième élément déformable,
- une étape de cuisson sous vide, générant une structure à âme alvéolaire préformée comprenant des ondulations sur ces deux faces formant les moyens de drainage,
- la structure à âme alvéolaire préformée étant utilisée dans l'étape de fabrication d'un élément à structure alvéolaire.

Avantageusement, la structure à âme alvéolaire comprend une multitude d'alvéoles, chacune associée à une ondulation de chacun des couches de stabilisation. Chaque ondulation est formée par une zone incurvée des couches de stabilisation vers l'intérieur de l'alvéole.

Selon un autre mode de réalisation, l'étape de fabrication d'un élément à structure alvéolaire comprend une sous étape de formation de deux couches de plis structuraux préformées avant l'étape de fabrication d'un élément à structure alvéolaire de façon à obtenir deux couches de plis structuraux préformées présentant chacune une surface gaufrée ou ondulée destinée à être positionnée en regard d'une face de la structure à âme alvéolaire pour former les moyens de drainage.

De préférence, la sous étape de formation de deux couches de plis structuraux préformées comprend une étape de positionnement d'une grille ou matrice de poinçonnage sur un moule, une étape de positionnement d'un couche de plis structuraux sur la grille ou matrice de poinçonnage, une étape de recouvrement par un contre moule et une étape de compression pour former un couches de plis structuraux préformée.

Selon un autre mode de réalisation, le procédé de fabrication d'un panneau composite comprend une étape de positionnement de plusieurs couches de fibres supplémentaires entre la structure à âme alvéolaire et chaque couche de plis structuraux. Les couches de fibres supplémentaires sont agencées de façon à former des interstices entres elles. Les interstices forment les moyens de drainage.

Selon un autre mode de réalisation, le procédé de fabrication d'un panneau composite comprend une étape de formation de canaux sur chacune des faces de la structure à âme alvéolaire avant l'étape de fabrication de l'élément à structure alvéolaire. Les canaux forment les moyens de drainage.

L'invention fournit ainsi un procédé permettant une fabrication simplifiée d'un panneau composite, en réduisant substantiellement le nombre d'étapes de fabrication, notamment en évitant une étape finale de collage des éléments entre eux, tout en permettant d'aboutir à un panneau composite dont les alvéoles conservent leur intégrité. Les alvéoles ne sont pas obturées par la résine.

Les moyens de drainages sont intégrés au panneau composite. Ils sont formés et utilisés lors du procédé de fabrication, puis conservés sur le produit final, sans détériorer les performances acoustiques et structurales du panneau composite.

La qualité de surface est obtenue grâce à l'application d'une deuxième partie de moule ou contre moule sur l'ensemble.

Il y a aussi moins de risque d'avoir des peaux avec des surfaces différentes dues à des cuissons différentes puisque le procédé de fabrication ne comprend qu'une seule cuisson.

De plus, il est utilisé moins de produits, réduisant l'impact environnemental.

Il y a moins d'énergie consommée pour la polymérisation.

Selon un autre aspect, l'invention concerne un panneau composite comprenant une structure à âme alvéolaire interposée entre deux peaux obtenu par le procédé de fabrication tel que défini précédemment. Des moyens de drainage formés durant le procédé sont intégrés dans le panneau composite.

La divulgation concerne également un élément à structure alvéolaire destiné à être infusée par une résine en vue d'une étape de polymérisation afin d'obtenir un panneau composite comprenant une âme centrale alvéolaire interposée entre deux peaux.

L'élément à structure alvéolaire comprend une structure à âme alvéolaire disposée entre deux couches de plis structuraux destinées à former les peaux.

L'élément à structure alvéolaire comprend des moyens de drainage pour répartir la résine lors de l'infusion. Les moyens de drainage présentent une géométrie configurée pour assurer le drainage de la résine dans l'élément à structure alvéolaire lors de l'infusion.

D'autres caractéristiques et avantages de l'invention ressortiront à la lecture de la description qui suit, donnée uniquement à titre d'exemple, en référence aux figures annexées, qui illustrent :
- figure 1, un élément à structure alvéolaire lors d'une étape de fabrication d'un panneau composite selon un mode de réalisation de l'invention utilisant un procédé de stabilisation ;
- figure 2, une structure à âme alvéolaire lors d'une étape de fabrication d'une structure à âme alvéolaire préformée selon un autre mode de réalisation de l'invention ;
- figure 3, une vue de dessus d'un couche de plis structuraux lors d'une sous étape de formation de deux couches de plis structuraux préformées ;
- figure 4, une vue de profil de ces couches de plis structuraux ;
- figure 5, un élément à structure alvéolaire lors d'une étape de fabrication d'un panneau composite selon un mode de réalisation de l'invention utilisant ces deux couches de plis structuraux préformées ;
- figure 6, un élément à structure alvéolaire lors d'une étape de fabrication d'un panneau composite selon un autre mode de réalisation de l'invention utilisant des couches de fibres supplémentaires ;
- figure 7, une structure à âme alvéolaire après une étape de formation de canaux sur chacune de ces faces ;
- figure 8, une structure à âme alvéolaire obtenue avec ces canaux ;
- figure 9, la structure à âme alvéolaire comprenant ces canaux lors d'une étape de fabrication d'un panneau composite selon un autre mode de réalisation de l'invention.

Sur l'ensemble de ces figures, des références identiques ou analogues désignent des organes ou ensembles d'organes identiques ou analogues.

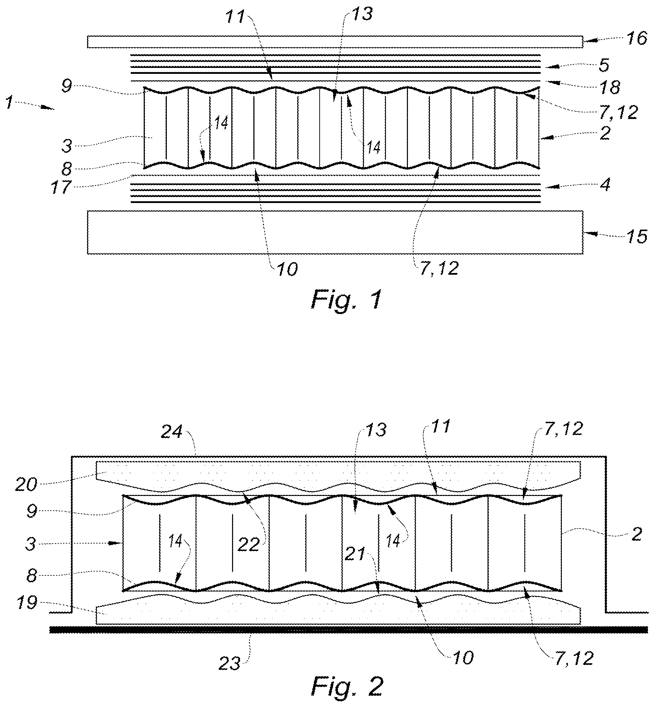

La figure 1 illustre un procédé de fabrication d'un panneau composite comprenant une âme centrale alvéolaire interposée entre deux peaux selon un mode de réalisation de l'invention.

Le procédé de fabrication comprend une étape de fabrication d'un élément à structure alvéolaire 1 comprenant une structure à âme alvéolaire 2 interposée entre deux couches de plis structuraux 4, 5 destinées à former les peaux du composite.

L'élément à structure alvéolaire 1 est un produit intermédiaire utilisé durant cette étape de fabrication.

La structure à âme alvéolaire 2 du produit intermédiaire et l'âme centrale alvéolaire du produit fini (le panneau composite) comprennent un réseau de parois alvéolaire 3 formant des alvéoles 13 ou cavités qui peuvent être en forme de nid d'abeille par exemple.

Le panneau composite peut ne pas comprendre de face aérodynamique.

Il comprend de préférence une ou deux faces aérodynamiques.

Les peaux sont positionnées en opposition de part et d'autre de l'âme centrale alvéolaire du composite pour former les faces aérodynamiques.

L'utilisation d'une peau aérodynamique ou acoustique perforée d'une multitude d'orifices permettant une communication fluidique entre l'extérieur et l'intérieur de l'âme centrale alvéolaire du composite, forme un panneau composite acoustique pouvant être utilisé comme volet ou panneau d'inverseur de poussée de nacelle de turboréacteur.

Le procédé de fabrication comprend une étape de positionnement de l'élément à structure alvéolaire 1 dans un moule comportant une première partie de moule 15 et une deuxième partie de moule 16.

Le procédé de fabrication comprend une étape de formation de moyens de drainage 7 de part et d'autre de la structure à âme alvéolaire 2 et une étape d'infusion de l'élément à structure alvéolaire 1 de sorte à l'imprégner d'une résine.

Le procédé de fabrication comprend une étape de réalisation d'un drainage de la résine par les moyens de drainage 7 dans l'élément à structure alvéolaire 1 lors de l'étape d'infusion. Les moyens de drainage 7 présentent une géométrie configurée pour assurer le drainage de la résine et imprégner l'élément à structure alvéolaire 1.

Le procédé de fabrication comprend une étape de polymérisation de l'élément à structure alvéolaire imprégné pour former le panneau composite.

La résine et les composants du panneau supportent une température de mise en œuvre supérieure à 160°.

On obtient un composant composite avec des moyens de drainage 7 intégrés, c'est à dire faisant partie de la structure finale du composite et dont la polymérisation a été faite en une seule étape.

L'ordre des étapes ci-dessus n'est pas limitatif et peut être différent.

Selon un mode de réalisation préféré représenté sur la figure 1, les moyens de drainage 7 sont obtenus par un procédé de stabilisation (ou stabilisation de forme) de façon à former des ondulations 12 le long de chaque face 10, 11 de l'élément à structure alvéolaire 1.

Lors de la stabilisation, les ondulations peuvent être obtenues par un différentiel de pression entre l'intérieur et l'extérieur de l'âme alvéolaire et figées lors d'une étape de polymérisation préliminaire.

De manière plus précise, le procédé de fabrication du panneau composite comprend une étape préliminaire de fabrication d'une structure à âme alvéolaire étanche avant l'étape de fabrication d'un élément à structure alvéolaire 1 comportant une étape de positionnement d'une première couche de stabilisation 8 sur une première face 10 de la structure à âme alvéolaire 2 et une étape de positionnement d'une deuxième couche de stabilisation 9 sur une deuxième face 11 de la structure à âme alvéolaire 2.

De préférence, les deux couches de stabilisation 8, 9 sont collées avec des adhésifs sur les bords périphériques de la structure à âme alvéolaire 2 lors de l'étape préliminaire de fabrication de la structure à âme alvéolaire 2 étanche.

La structure à âme alvéolaire 2 étanche est un produit intermédiaire qui est ensuite utilisé pour la fabrication du panneau composite.

Une première couche de plis structuraux 4 sec est drapée sur la première partie de moule 15.

En option, un premier tissu de verre 17 peut être positionné sur la première couche de plis structuraux 4.

La structure à âme alvéolaire 2 étanche est positionnée sur le premier tissu de verre 17.

En option, un deuxième tissu de verre 18 peut être positionné sur la structure à âme alvéolaire 2 étanche.

Une deuxième couche de plis structuraux 5 sec est drapée sur le deuxième tissu de verre 18.

On obtient un élément à structure alvéolaire 1 comprenant une structure à âme alvéolaire 2 interposée entre deux couches de plis structuraux 4, 5 qui est recouvert par la deuxième partie de moule 16.

Les étapes d'infusion et de polymérisation sont ensuite appliquées.

Les moyens de drainage 7 sont formés lors de l'étape de polymérisation durant laquelle les couches de stabilisation 8, 9 sont déformées pour former des ondulations 12 le long de chaque face 10, 11 de l'élément à structure alvéolaire 1.

La structure à âme alvéolaire 2 comprend une multitude d'alvéoles 13 chacune associée à une ondulation 12 de chacune des couches de stabilisation 8, 9.

Chaque ondulation 12 est formée par une zone incurvée 14 des couches de stabilisation 8, 9 vers l'intérieur de l'alvéole 13. Ces ondulations 12 forment des canaux de drainage permettant de drainer la résine lors de l'infusion.

Selon un autre mode de réalisation illustré sur la figure 2, le procédé de fabrication d'un panneau composite comprend une étape préliminaire de fabrication d'une structure à âme alvéolaire 2 préformée avant l'étape de fabrication d'un élément à structure alvéolaire 1 comportant :
- une étape de positionnement d'un premier élément déformable 19 sur un moule 23,
- une étape de positionnement d'une première couche de stabilisation 8 sur le premier élément déformable 19,
- une étape de positionnement d'une première face 10 de la structure à âme alvéolaire 2 sur la première couche de stabilisation 8,
- une étape de positionnement d'une deuxième couche de stabilisation 9 sur une deuxième face 11 de la structure à âme alvéolaire 2,
- une étape de positionnement d'un deuxième élément déformable 20 sur la deuxième couche de stabilisation 9, les premier et deuxième éléments déformables 19, 20 comprenant chacun une face ondulée 21, 22 destinée à être en contact des couches de stabilisation 8, 9 respectives,
- une étape de positionnement d'un contre moule 24 sur le deuxième élément déformable 20,
- une étape de cuisson sous vide, générant une structure à âme alvéolaire 2 préformée comprenant des ondulations 12 sur ces deux faces 10, 11, formant les moyens de drainage 7.

Le premier élément déformable 19 épouse la première face 10 de la structure à âme alvéolaire 2 et le deuxième élément déformable 20 épouse la deuxième face 11 de la structure à âme alvéolaire 2.

Le premier et le deuxième élément déformable 19, 20 sont des templates de forme (matelas textile (plis de « breather » par exemple) ou matelas de silicone (plis de DAM par exemple)).

De préférence, un marouflage normal est réalisé sur le premier et le deuxième élément déformable 19, 20.

L'ensemble est cuit sous vide suivant le cycle connu des couches de stabilisation 8, 9.

La structure à âme alvéolaire 2 préformée obtenue comprend une multitude d'alvéoles 13 chacune associée à une ondulation 12 de chacun des couches de stabilisation 8, 9.

Chaque ondulation 12 est formée par une zone incurvée 14 des couches de stabilisation 8, 9 devenues étanches, vers l'intérieur de l'alvéole 13. Ces ondulations 12 forment des canaux de drainage permettant de drainer la résine lors de l'infusion.

La structure à âme alvéolaire 2 préformée est un produit intermédiaire qui est ensuite utilisé dans l'étape de fabrication d'un élément à structure alvéolaire 1.

Lors de la fabrication d'un élément à structure alvéolaire 1, une première couche de plis structuraux 4 est positionnée sur une première partie de moule 15.

La structure à âme alvéolaire 2 préformée est ensuite positionnée sur la première couche de plis structuraux 4. La structure à âme alvéolaire 2 repose sur sa première face 10.

Une deuxième couche de plis structuraux 5 est positionnée sur la deuxième face 11 de la structure à âme alvéolaire 2.

La deuxième partie de moule 16 est ensuite positionnée au-dessus de la deuxième couche de plis structuraux 5 pour refermer le moule.

Les étapes d'infusion de résine et de polymérisation sont ensuite réalisées sous vide et à haute température de préférence supérieure à 160°.

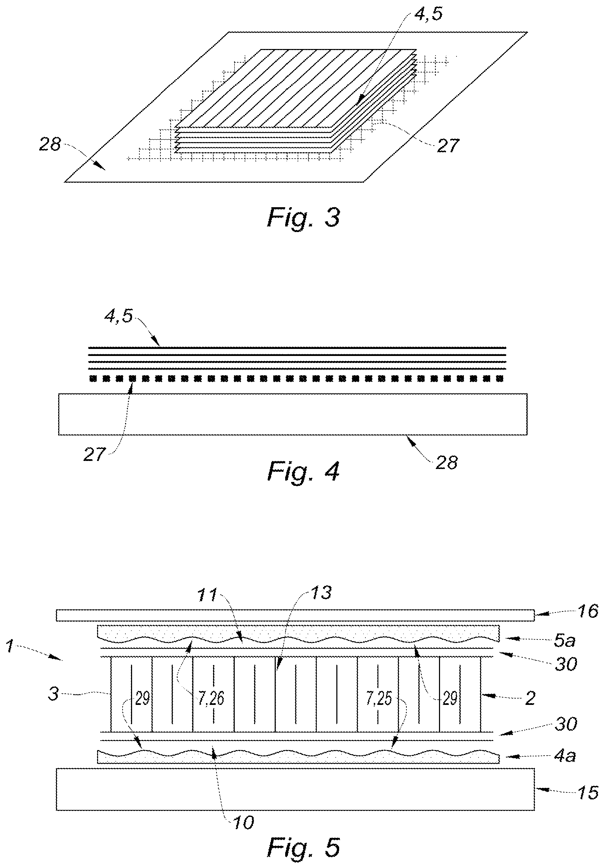

Selon un autre mode de réalisation représenté sur les figures 3 à 5, l'étape de fabrication d'un élément à structure alvéolaire 1 comprend une sous étape de formation de deux couches de plis structuraux préformées 4a, 5a avant l'étape de fabrication d'un élément à structure alvéolaire 1.

Les deux couches de plis structuraux préformées 4a, 5a présentent chacune une surface gaufrée ou ondulée 25, 26 destinée à être positionnée en regard d'une face 10, 11 de la structure à âme alvéolaire 2 pour former les moyens de drainage 7.

De manière plus précise, lors de la sous étape de formation de chacune des deux couches de plis structuraux préformées 4a, 5a, une grille ou matrice de poinçonnage 27 est mise en place sur un moule 28, comme illustré sur les figures 3 et 4.

La grille ou matrice de poinçonnage 27 est non adhérente (téflon par exemple) et comprend un quadrillage comme un maillage de 5X5 mm, par exemple.

Chaque couche de plis structuraux 4, 5 est positionnée sur une grille ou matrice de poinçonnage 27 respective et peut être formée de plusieurs films de carbone poudrés, par exemple.

Un contre moule recouvre la couche de plis structuraux 4, 5.

Chaque couche de plis structuraux 4, 5 est compactée pour obtenir une préforme et donc une couche de plis structuraux préformée 4a, 5a présentant une surface gaufrée ou ondulée 25, 26 avec des canaux de drainage 29.

La grille ou matrice de poinçonnage 27 est ensuite retirée.

Comme illustré sur la figure 5, lors de la fabrication d'un élément à structure alvéolaire 1, une première couche de plis structuraux préformée 4a est positionnée sur une première partie de moule 15.

La structure à âme alvéolaire 2 est ensuite positionnée sur la première couche de plis structuraux préformée 4a. La structure à âme alvéolaire 2 repose sur sa première face 10.

Une deuxième couche de plis structuraux préformée 5a est positionnée sur la deuxième face 11 de la structure à âme alvéolaire 2.

La deuxième partie de moule 16 est ensuite positionnée au-dessus de la deuxième couche de plis structuraux préformée 5a pour refermer le moule.

Des tissus de verre 30 peuvent éventuellement être positionnés entre chaque couche de plis structuraux préformée 4a, 5a et la structure à âme alvéolaire 2.

Les étapes d'infusion de résine et de polymérisation sont ensuite réalisées sous vide et à haute température de préférence supérieure à 160°.

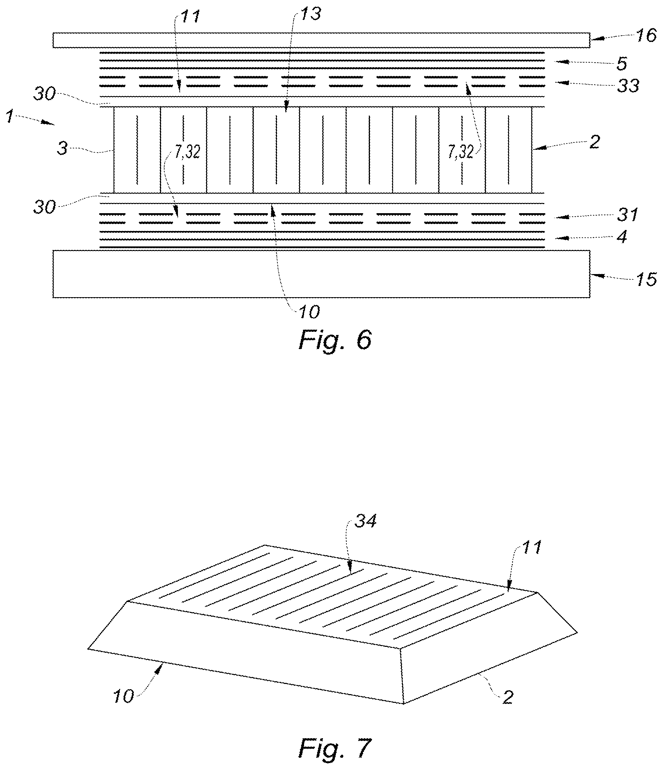

Selon un autre mode de réalisation représenté sur la figure 6, l'étape de fabrication d'un élément à structure alvéolaire 1 comprend une étape de positionnement de plusieurs couches de fibres supplémentaires 31, 33 entre la structure à âme alvéolaire 2 et chaque couche de plis structuraux 4, 5.

Les couches de fibres supplémentaires 31, 33 sont agencées de façon à former des interstices 32 ou canaux de drainage entres elles, formant les moyens de drainage 7.

Plus précisément, lors de la fabrication d'un élément à structure alvéolaire 1, une première couche de plis structuraux 4 est positionnée sur une première partie de moule 15.

Une première couche de fibres supplémentaires 31 est drapée entre la structure à âme alvéolaire 2 et la première couche de plis structuraux 4.

Les fibres supplémentaires sont agencées de façon à former des interstices 32 ou jeu entre ces dernières.

La structure à âme alvéolaire 2 est ensuite positionnée sur la première couche de fibres supplémentaires 31. La structure à âme alvéolaire 2 repose sur sa première face 10.

Une deuxième couche de fibres supplémentaires 33 est drapée sur la deuxième face 11 de la structure à âme alvéolaire 2.

Les fibres supplémentaires sont agencées de façon à former des interstices 32 ou jeu entre ces dernières.

La deuxième couche de plis structuraux 5 est positionnée sur la deuxième couche de fibres supplémentaires 33.

La deuxième partie de moule 16 est ensuite positionnée au-dessus de la deuxième couche de plis structuraux 5 pour refermer le moule.

Des tissus de verre 30 peuvent éventuellement être positionnés entre chaque couche de fibres supplémentaires 31, 33 et la structure à âme alvéolaire 2.

Les étapes d'infusion de résine et de polymérisation sont ensuite réalisées sous vide et à haute température (de préférence supérieure à 160°).

La géométrie formée par les couches de fibres supplémentaires 31, 33 est configurée pour assurer le drainage de la résine lors de l'infusion.

Selon un autre mode de réalisation représenté sur la figure 7, l'étape de fabrication d'un élément à structure alvéolaire 1 comprend une étape de formation de canaux 34 sur chacune des faces 10, 11 de la structure à âme alvéolaire 2 avant l'étape de fabrication de l'élément à structure alvéolaire 1.

Les canaux 34 forment les moyens de drainage 7.

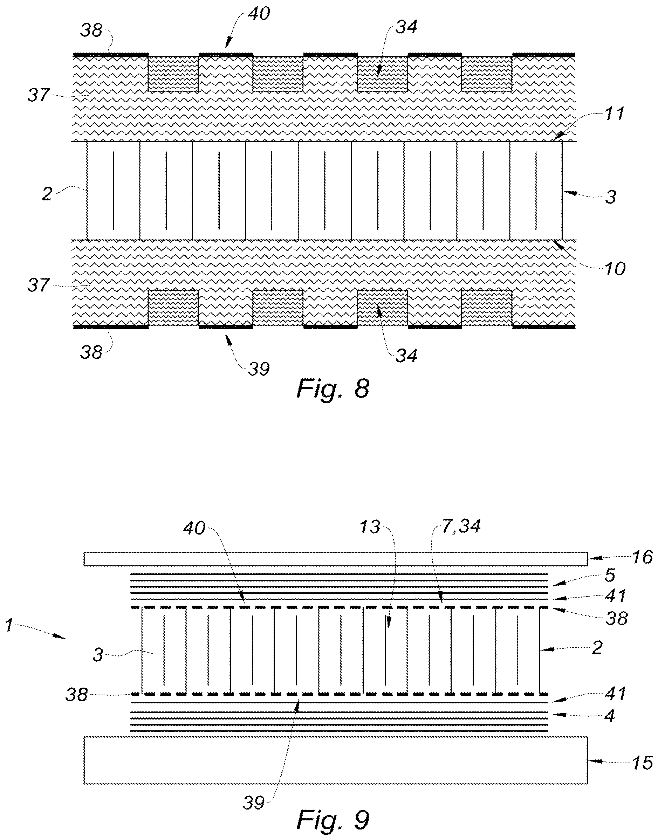

Lors de cette étape de formation de canaux 34, des couches d'étanchéités 37 (composées par exemple de plis d'adhésifs, de verre, de carbone ou autre) sont collés sur la face 10, 11 de la structure à âme alvéolaire 2, comme représenté sur la figure 8.

Ces couches d'étanchéités 37 peuvent être protégées par un tissu à délaminer 38.

Un contre moule est positionné en pression sur l'ensemble qui est polymérisé afin d'étancher la structure à âme alvéolaire 2 et de coller les différentes couches ensemble et sur la structure à âme alvéolaire 2.

Les canaux 34 peuvent être réalisés par usinage de rainures régulières dans le sens de l'infusion. Le rainurage peut être également un quadrillage. Le rainurage est réalisé après polymérisation.

Les canaux 34 peuvent être réalisés en variante par un drapage de fibre carbone, verre ou autre espacées de manière à obtenir des canaux. La polymérisation se fait donc après la mise en place des fibres.

En variante, les canaux 34 peuvent être réalisés en installant un poinçon (grille téflon, par exemple) sur les tissus et sous le contre moule. La polymérisation se fait après la mise en place du poinçon.

Les tissus à délaminer sont ensuite retirés.

La figure 8 représente la structure à âme alvéolaire 2 obtenue avec les canaux 34.

La structure à âme alvéolaire 2 comprend ainsi deux faces externes rainurées 39, 40.

Lors de la fabrication d'un élément à structure alvéolaire 1 tel qu'illustré sur la figure 9, une première couche de plis structuraux 4 est positionnée sur une première partie de moule 15.

La structure à âme alvéolaire 2 rainurée est ensuite positionnée sur la première couche de plis structuraux 4. La structure à âme alvéolaire 2 rainurée repose sur sa première face externe rainurée 39.

Une deuxième couche de plis structuraux 5 est positionnée sur la deuxième face externe rainurée 40 de la structure à âme alvéolaire 2.

La deuxième partie de moule 16 est ensuite positionnée au-dessus du deuxième couche de plis structuraux 5 pour refermer le moule.

En option, une couche de tissus de verre 41 peut être positionnée entre chaque couche de plis structuraux 4, 5 et la structure à âme alvéolaire 2 rainurée.

Les étapes d'infusion de résine et de polymérisation sont ensuite réalisées sous vide et à haute température.

La résine est ainsi drainée par les canaux 34.

L'invention est décrite dans ce qui précède à titre d'exemple. Il est entendu que l'homme du métier est à même de réaliser différentes variantes de réalisation de l'invention sans pour autant sortir du cadre des revendications qui suivent.

## Revendications

1. Procédé de fabrication d'un panneau composite comprenant une âme centrale alvéolaire interposée entre deux peaux, le procédé de fabrication comprenant les étapes suivantes :
- fabrication d'un élément à structure alvéolaire (1) comprenant une structure à âme alvéolaire (2) interposée entre deux couches de plis structuraux (4, 5) destinées à former les peaux,
- positionnement de l'élément à structure alvéolaire (1) dans un moule,
- formation de moyens de drainage (7) de part et d'autre de la structure à âme alvéolaire (2),
- infusion de l'élément à structure alvéolaire (1) de sorte à l'imprégner d'une résine,
- réalisation d'un drainage de la résine par les moyens de drainage (7) dans l'élément à structure alvéolaire (1) lors de l'étape d'infusion, lesdits moyens de drainage (7) présentant une géométrie configurée pour assurer ledit drainage, et
- polymérisation de l'élément à structure alvéolaire imprégné pour former le panneau composite.

2. Procédé de fabrication d'un panneau composite selon la revendication 1, **caractérisé en ce que** les moyens de drainage (7) sont obtenus par un procédé de stabilisation de façon à former des ondulations (12) le long de chaque face (10, 11) de l'élément à structure alvéolaire (1).

3. Procédé de fabrication d'un panneau composite selon la revendication 2, **caractérisé en ce qu'**il comprend :
- une étape préliminaire de fabrication d'une structure à âme alvéolaire (2) étanche avant l'étape de fabrication d'un élément à structure alvéolaire (1) comportant une étape de positionnement d'une première couche de stabilisation (8) sur une première face (10) de la structure à âme alvéolaire (2) et une étape de positionnement d'une deuxième couche de stabilisation (9) sur une deuxième face (11) de la structure à âme alvéolaire (2),
- les moyens de drainage (7) étant obtenus lors d'une étape de polymérisation préliminaire durant laquelle les couches de stabilisation (8, 9) sont déformées pour former des ondulations (12) le long de chaque face (10, 11) de l'élément à structure alvéolaire (1).

4. Procédé de fabrication d'un panneau composite selon la revendication 3, **caractérisé en ce que** les deux couches de stabilisation (8, 9) sont collées sur les bords périphériques de la structure à âme alvéolaire (2) lors de l'étape préliminaire de fabrication de la structure à âme alvéolaire (2) étanche.

5. Procédé de fabrication d'un panneau composite selon la revendication 1, **caractérisé en ce qu'**il comprend une étape préliminaire de fabrication d'une structure à âme alvéolaire (2) préformée avant l'étape de fabrication d'un élément à structure alvéolaire (1) comportant :
- une étape de positionnement d'un premier élément déformable (19) sur un moule (23),
- une étape de positionnement d'une première couche de stabilisation (8) sur le premier élément déformable (19),
- une étape de positionnement d'une première face (10) de la structure à âme alvéolaire (2) sur la première couche de stabilisation (8),
- une étape de positionnement d'une deuxième couche de stabilisation (9) sur une deuxième face (11) de la structure à âme alvéolaire (2),
- une étape de positionnement d'un deuxième élément déformable (20) sur la deuxième couche de stabilisation (9), les premier et deuxième éléments déformables (19, 20) étant destinés à être en contact des couches de stabilisation (8, 9) respectives,
- une étape de positionnement d'un contre moule (24) sur le deuxième élément déformable (20),
- une étape de cuisson sous vide, générant une structure à âme alvéolaire (2) préformée comprenant des ondulations (12) sur ces deux faces (10, 11) formant les moyens de drainage (7),
- la structure à âme alvéolaire (2) préformée étant utilisée dans l'étape de fabrication d'un élément à structure alvéolaire (1).

6. Procédé de fabrication d'un panneau composite selon l'une quelconque des revendications 3 à 5, **caractérisé en ce que** la structure à âme alvéolaire (2) comprend une multitude d'alvéoles (13), chacune associée à une ondulation (12) de chacune des couches de stabilisation (8, 9), chaque ondulation (12) étant formée par une zone incurvée (14) des couches de stabilisation (8, 9) vers l'intérieur de l'alvéole (13).

7. Procédé de fabrication d'un panneau composite selon la revendication 1, **caractérisé en ce que** l'étape de fabrication d'un élément à structure alvéolaire (1) comprend une sous étape de formation de deux couches de plis structuraux préformées (4a, 5a) avant l'étape de fabrication d'un élément à structure alvéolaire (1) de façon à obtenir deux couches de plis structuraux préformées (4a, 5a) présentant chacun une surface gaufrée ou ondulée (25, 26) destinée à être positionnée en regard d'une face (10, 11) de la structure à âme alvéolaire (2) pour former les moyens de drainage (7).

8. Procédé de fabrication d'un panneau composite selon la revendication 7, **caractérisé en ce que** la sous étape de formation de deux couches de plis structuraux préformées (4a, 5a) comprend une étape de positionnement d'une grille ou matrice de poinçonnage (27) sur un moule (28), une étape de positionnement d'une couche de plis structuraux (4, 5) sur la grille ou la matrice de poinçonnage (27), une étape de recouvrement par un contre moule et une étape de compression pour former une couche de plis structuraux préformée (4a, 5a) et gauffrés, formant les moyens de drainage (7).

9. Procédé de fabrication d'un panneau composite selon la revendication 1, **caractérisé en ce qu'**il comprend une étape de positionnement de plusieurs couches de fibres supplémentaires (31, 33) entre la structure à âme alvéolaire (2) et chaque couche de plis structuraux (4, 5), les couches de fibres supplémentaires (31, 33) étant agencées de façon à former des interstices (32) entres elles, lesdits interstices (32) formant les moyens de drainage (7).

10. Procédé de fabrication d'un panneau composite selon la revendication 1, **caractérisé en ce qu'**il comprend une étape de formation de canaux (34) sur chacune des faces (10, 11) de la structure à âme alvéolaire (2) avant l'étape de fabrication de l'élément à structure alvéolaire (1), lesdits canaux (34) formant les moyens de drainage (7).

11. Panneau composite comprenant une structure à âme alvéolaire (2) interposée entre deux peaux **caractérisé en ce qu'**il est obtenu par le procédé de fabrication tel que défini selon l'une quelconque des revendications 1 à 10, des moyens de drainage (7) formés durant ledit procédé étant intégrés dans le panneau composite.

## Patentansprüche

1. Verfahren zur Herstellung einer Verbundplatte, die einen wabenförmigen Mittelkern umfasst, der zwischen zwei Häuten eingefügt ist, wobei das Herstellungsverfahren die folgenden Schritte umfasst:
- Herstellen eines wabenförmigen Strukturelements (1), das eine wabenförmige Kernstruktur (2) umfasst, die zwischen zwei Schichten struktureller Lagen (4, 5) eingefügt ist, die dazu bestimmt sind, die Häute zu bilden,
- Positionieren des wabenförmigen Strukturelements (1) in eine Form,
- Bilden von Drainagemitteln (7) auf beiden Seiten der wabenförmigen Kernstruktur (2),
- Infundieren des wabenförmigen Strukturelements (1), um es mit einem Harz zu imprägnieren,
- Durchführen einer Drainage des Harzes durch die Drainagemittel (7) in dem wabenförmigen Strukturelement (1) während des Infusionsschritts, wobei die Drainagemittel (7) eine Geometrie aufweisen, die so konfiguriert ist, dass sie die Drainage gewährleistet, und
- Polymerisieren des imprägnierten wabenförmigen Strukturelements, um die Verbundplatte zu bilden.

2. Verfahren zur Herstellung einer Verbundplatte nach Anspruch 1, **dadurch gekennzeichnet, dass** die Drainagemittel (7) durch ein Stabilisierungsverfahren erhalten werden, um entlang jeder Seite (10, 11) des wabenförmigen Strukturelements (1) Wellen (12) zu bilden.

3. Verfahren zur Herstellung einer Verbundplatte nach Anspruch 2, **dadurch gekennzeichnet, dass** es Folgendes umfasst:
- einen vorläufigen Schritt des Herstellens einer dichten wabenförmigen Kernstruktur (2) vor dem Schritt des Herstellens eines wabenförmigen Strukturelements (1), der einen Schritt des Positionierens einer ersten Stabilisierungsschicht (8) auf einer ersten Seite (10) der wabenförmigen Kernstruktur (2) und einen Schritt des Positionierens einer zweiten Stabilisierungsschicht (9) auf einer zweiten Seite (11) der wabenförmigen Kernstruktur (2) enthält,
- wobei die Drainagemittel (7) während eines vorläufigen Polymerisationsschritts erhalten werden, während dessen die Stabilisierungsschichten (8, 9) verformt werden, um entlang jeder Seite (10, 11) des wabenförmigen Strukturelements (1) Wellen (12) zu bilden.

4. Verfahren zur Herstellung einer Verbundplatte nach Anspruch 3, **dadurch gekennzeichnet, dass** die beiden Stabilisierungsschichten (8, 9) während des vorläufigen Herstellungsschritts der dichten wabenförmigen Kernstruktur (2) auf die Umfangskanten der wabenförmigen Kernstruktur (2) geklebt werden.

5. Verfahren zur Herstellung einer Verbundplatte nach Anspruch 1, **dadurch gekennzeichnet, dass** es einen vorläufigen Schritt des Herstellens einer vorgeformten wabenförmigen Kernstruktur (2) vor dem Schritt des Herstellens eines wabenförmigen Strukturelements (1) umfasst, der Folgendes enthält:
- einen Schritt des Positionierens eines ersten verformbaren Elements (19) auf einer Form (23),
- einen Schritt des Positionierens einer ersten Stabilisierungsschicht (8) auf dem ersten verformbaren Element (19),
- einen Schritt des Positionierens einer ersten Seite (10) der wabenförmigen Kernstruktur (2) auf der ersten Stabilisierungsschicht (8),
- einen Schritt des Positionierens einer zweiten Stabilisierungsschicht (9) auf einer zweiten Seite (11) der wabenförmigen Kernstruktur (2),
- einen Schritt des Positionierens eines zweiten verformbaren Elements (20) auf der zweiten Stabilisierungsschicht (9), wobei das erste und das zweite verformbare Element (19, 20) dazu bestimmt sind, mit den jeweiligen Stabilisierungsschichten (8, 9) in Kontakt zu sein,
- einen Schritt des Positionierens einer Gegenform (24) auf dem zweiten verformbaren Element (20),
- einen Vakuumgarschritt, der eine vorgeformte wabenförmige Kernstruktur (2) erzeugt, die auf ihren beiden Seiten (10, 11), die die Drainagemittel (7) bilden, Wellen (12) umfasst,
- wobei die vorgeformte wabenförmige Kernstruktur (2) im Schritt des Herstellens eines wabenförmigen Strukturelements (1) verwendet wird.

6. Verfahren zur Herstellung einer Verbundplatte nach einem der Ansprüche 3 bis 5, **dadurch gekennzeichnet, dass** die wabenförmige Kernstruktur (2) eine Vielzahl von Waben (13) umfasst, die jeweils mit einer Welle (12) jeder der Stabilisierungsschichten (8, 9) verbunden sind, wobei jede Welle (12) durch einen gekrümmten Bereich (14) der Stabilisierungsschichten (8, 9) in Richtung des Inneren der Wabe (13) ausgebildet ist.

7. Verfahren zur Herstellung einer Verbundplatte nach Anspruch 1, **dadurch gekennzeichnet, dass** der Schritt des Herstellens eines wabenförmigen Strukturelements (1) einen Unterschritt des Bildens von zwei Schichten vorgeformter Strukturlagen (4a, 5a) vor dem Schritt des Herstellens eines wabenförmigen Strukturelements (1) umfasst, um zwei Schichten vorgeformter Strukturlagen (4a, 5a) zu erhalten, die jeweils eine geprägte oder wellige Oberfläche (25, 26) aufweisen, die dazu bestimmt ist, gegenüber einer Seite (10, 11) der wabenförmigen Kernstruktur (2) positioniert zu werden, um die Drainagemittel (7) zu bilden.

8. Verfahren zur Herstellung einer Verbundplatte nach Anspruch 7, **dadurch gekennzeichnet, dass** der Unterschritt des Bildens von zwei Schichten vorgeformter Strukturlagen (4a, 5a) einen Schritt des Positionierens eines Stanzgitters oder einer Stanzmatrix (27) auf einer Form (28), einen Schritt des Positionierens einer Schicht aus Strukturlagen (4, 5) auf dem Stanzgitter oder der Stanzmatrix (27), einen Schritt des Abdeckens mit einer Gegenform und einen Kompressionsschritt zum Bilden einer Schicht aus vorgeformten und geprägten Schichten (4a, 5a) aus Strukturlagen, die die Drainagemittel (7) bilden, umfasst.

9. Verfahren zur Herstellung einer Verbundplatte nach Anspruch 1, **dadurch gekennzeichnet, dass** es einen Schritt des Positionierens mehrerer zusätzlicher Faserschichten (31, 33) zwischen der wabenförmigen Kernstruktur (2) und jeder Schicht aus Strukturlagen (4, 5) umfasst, wobei die zusätzlichen Faserschichten (31, 33) so angeordnet sind, dass sie Zwischenräume (32) zwischeneinander bilden, wobei die Zwischenräume (32) die Drainagemittel (7) bilden.

10. Verfahren zur Herstellung einer Verbundplatte nach Anspruch 1, **dadurch gekennzeichnet, dass** es einen Schritt des Bildens von Kanälen (34) auf jeder der Seiten (10, 11) der wabenförmigen Kernstruktur (2) vor dem Schritt des Herstellens des wabenförmigen Strukturelements (1) umfasst, wobei die Kanäle (34) die Drainagemittel (7) bilden.

11. Verbundplatte, die eine wabenförmige Kernstruktur (2) umfasst, die zwischen zwei Häuten eingefügt ist, **dadurch gekennzeichnet, dass** sie durch das Herstellungsverfahren gemäß einem der Ansprüche 1 bis 10 erhalten wird, wobei während des Verfahrens gebildete Drainagemittel (7) in die Verbundplatte integriert sind.

## Claims

1. A method for manufacturing a composite panel comprising a cellular central core interposed between two skins, the manufacturing method comprising the following steps:
- manufacture of an element with a cellular structure (1) comprising a cellular core structure (2) interposed between two layers of structural plies (4, 5) intended to form the skins,
- positioning of the element with a cellular structure (1) within a mold,
- formation of drain means (7) on either side of the cellular core structure (2),
- infusion of the element with a cellular structure (1) so as to impregnate it with a resin,
- carrying out a draining of the resin through the drain means (7) in the element with a cellular structure (1) during the infusion step, said drain means (7) having a geometry configured to ensure said draining, and
- polymerization of the impregnated element with a cellular structure to form the composite panel.

2. The method for manufacturing a composite panel according to claim 1, **characterized in that** the drain means (7) are obtained by a stabilization method so as to form corrugations (12) along each face (10, 11) of the element with a cellular structure (1).

3. The method for manufacturing a composite panel according to claim 2, **characterized in that** it comprises:
- a preliminary step of manufacturing a tight cellular core structure (2) before the step of manufacturing an element with a cellular structure (1) including a step of positioning a first stabilization layer (8) over a first face (10) of the cellular core structure (2) and a step of positioning a second stabilization layer (9) over a second face (11) of the cellular core structure (2),
- the drain means (7) being obtained during a preliminary polymerization step during which the stabilization layers (8, 9) are deformed so as to form corrugations (12) along each face (10, 11) of the element with a cellular structure (1).

4. The method for manufacturing a composite panel according to claim 3, **characterized in that** the two stabilization layers (8, 9) are glued on the peripheral edges of the cellular core structure (2) during the preliminary step of manufacturing the tight cellular core structure (2).

5. The method for manufacturing a composite panel according to claim 1, **characterized in that** it comprises a preliminary step of manufacturing a preformed cellular core structure (2) before the step of manufacturing an element with a cellular structure (1) including:
- a step of positioning a first deformable element (19) over a mold (23),
- a step of positioning a first stabilization layer (8) over the first deformable element (19),
- a step of positioning a first face (10) of the cellular core structure (2) over the first stabilization layer (8),
- a step of positioning a second stabilization layer (9) over a second face (11) of the cellular core structure (2),
- a step of positioning a second deformable element (20) over the second stabilization layer (9), the first and second deformable elements (19, 20) being intended to be in contact with the respective stabilization layers (8, 9),
- a step of positioning a counter-mold (24) over the second deformable element (20),
- a vacuum baking step, generating a preformed cellular core structure (2) comprising corrugations (12) over these two faces (10, 11) forming the drain means (7),
- the preformed cellular core structure (2) being used in the step of manufacturing an element with a cellular structure (1).

6. The method for manufacturing a composite panel according to any one of claims 3 to 5, **characterized in that** the cellular core structure (2) comprises a multitude of cells (13), each associated to one corrugation (12) of each of the stabilization layers (8, 9), each corrugation (12) being formed by an area (14) of the stabilization layers (8, 9) incurved towards the inside of the cell (13).

7. The method for manufacturing a composite panel according to claim 1, **characterized in that** the step of manufacturing an element with a cellular structure (1) comprises a substep of forming two preformed layers of structural plies (4a, 5a) before the step of manufacturing an element with a cellular structure (1) so as to obtain two preformed layers of structural plies (4a, 5a) each having an embossed or corrugated surface (25, 26) intended to be positioned opposite a face (10, 11) of the cellular core structure (2) to form the drain means (7).

8. The method for manufacturing a composite panel according to claim 7, **characterized in that** the substep of forming two preformed layers of structural plies (4a, 5a) comprises a step of positioning a punching grid or die (27) on a mold (28), a step of positioning a layer of structural plies (4, 5) over the punching grid or die (27), a step of coverage with a counter-mold and a compression step to form a preformed and embossed layer of structural plies (4a, 5a), forming the drain means (7).

9. The method for manufacturing a composite panel according to claim 1, **characterized in that** it comprises a step of positioning several additional layers of fibers (31, 33) between the cellular core structure (2) and each layer of structural plies (4, 5), the additional layers of fibers (31, 33) being arranged so as to form interstices (32) therebetween, said interstices (32) forming the drain means (7).

10. The method for manufacturing a composite panel according to claim 1, **characterized in that** it comprises a step of forming channels (34) on each of the faces (10, 11) of the cellular core structure (2) before the step of manufacturing the element with a cellular structure (1), said channels (34) forming the drain means (7).

11. A composite panel comprising a cellular core structure (2) interposed between two skins **characterized in that** it is obtained by the manufacturing method as defined according to any one of claims 1 to 10, drain means (7) formed during said method being integrated into the composite panel.
